# EUROPEAN PATENT APPLICATION

(11) **EP 1 545 104 A2**
(43) Date of publication of application: **22.06.2005**
(21) Application number: 04257682.7
(22) Date of filing: 10.12.2004
(51) Int. Cl.: H04M 3/42

(54) **Telephone network based call recording**

(30) Priority: 16.12.2003 GB 0329090
(71) Applicant: Ward, Nicholas Paul, Bolton, BL7 9NX (GB)
(72) Inventor: Ward, Nicholas Paul, Bolton, BL7 9NX (GB)
(74) Representative: Branfield, Henry Anthony

(57) **Abstract**

A telecommunication network has means connecting a duplex speech conversation to a recording system for duplex speech, and having a method therefore, comprising an activation means where said activation means requires only a single stage dialling or keying process, where either by:
(a) inserting an access code prior to a telephone number or
(b) utilising a network triggering mechanism for each incoming telephone call to each specified user
a duplex speech conversation being carried by the telecommunication network is routed via a multi-channel monitor on a non-switched multi-channel monitored duplex through route and further comprising a multi-channel twin simplex interface which connects the multi-channel monitor to a multi-channel network recording system for duplex speech said multi-channel network recording system for duplex speech comprising a signalling extraction and interpretation function and a multi-channel recording function for duplex speech, the multi-channel recording function having sufficient capacity simultaneously to record all duplex speech channels on the multi-channel monitored duplex through route.

## Description

During the course of a telephone conversation, it is often the case that important details may be mentioned. Normally however, there is no permanent record of such a conversation, which can be referred to at a later time.

Devices exist which can be attached to a telephone handset or landline, to record a telephone conversation. Telephone call centres may use multiple recording devices to record the telephone conversations between the staff of the call centre and clients.

For various reasons most users, of a telephone network, particularly individual rather than corporate users, do not have a means which is easily available to them, to record telephone conversations.

At present devices for recording telephone conversations are not very widely available. Recording devices, which can be attached to a landline handset or which can be attached directly to landline socket, are unlikely to be suitable to work with a mobile phone. Even if a recording device could be successfully attached to a mobile phone, the mobile phone would probably become less convenient for a user to carry. Any recording device, which records both speech circuits and which is attached as part of the user terminal equipment, will hereinafter be described as a User Terminal Recording Device For Duplex Speech.

A user of a telephone network who always requires that all telephone calls, both originated and/or received by the user, should be recorded, is likely to employ a User Terminal Recording Device For Duplex Speech. An exception to this is when such a user is employing a mobile phone, which does not have a built-in User Terminal Recording Device For Duplex Speech.

A user of a telephone network may not wish to invest in a User Terminal Recording Device For Duplex Speech. Some mobile phones have a built-in User Terminal Recording Device for Duplex Speech.

There are several reasons (some of which are listed above), why a user of a telephone network, will not have a User Terminal Recording Device For Duplex Speech available when a telephone call is made, or received: and where the user would like the duplex speech to be recorded. In which case the user of the telephone network, may wish to employ a channel of a Multi-Channel Network Recording System For Duplex Speech, which is not part of any User Terminal equipment, but which is connected to a central part of a telephone network.

There already exists Multi-Channel Network Recording Systems For Simplex Speech, which are employed within central telephone networks for recording messages. These Multi-Channel Network Recording Systems For Simplex Speech are used to offer the equivalent service to that of an Answering Machine. An Answering Machine is an example of a User Terminal Recording Device For Simplex Speech.

There already exists a form of Multi-Channel Network Recording System For Duplex Speech, which is employed for the lawful interception of duplex telephone conversations. Appendix A includes information regarding such a product.

The form of Multi-Channel Network Recording System For Duplex Speech as described in Appendix A, is normally used only to record a few of the duplex speech channels it monitors. The duplex speech channels it monitors are those, which correspond to telephone calls that have originated from particular predefined telephone numbers, or which have been connected to particular predefined telephone numbers. Consequently the telephone signalling is monitored in order to determine, if a duplex speech channel, originates from, or is connected to, any of the predefined telephone numbers. The monitoring of such duplex speech channels will normally be without either user being aware that their conversation is being recorded.

Such a form of Multi-Channel Network Recording System For Duplex Speech would only attempt to record the duplex speech provided a valid telephone connection has been established to or from one of the predefined telephone numbers.

According to the present invention there is provided a telecommunication network comprising means connecting a duplex speech conversation to a recording system for duplex speech, comprising an activation means where said activation means requires only a single stage dialling or keying process, where either by:
(a) inserting an access code prior to a telephone number or
(b) utilising a network triggering mechanism for each incoming telephone call to each specified user
a duplex speech conversation being carried by the telecommunication network is routed via a multi-channel monitor on a non-switched multi-channel monitored duplex through route and further comprising a multi-channel twin simplex interface which connects the multi-channel monitor to a multi-channel network recording system for duplex speech said multi-channel network recording system for duplex speech comprising a signalling extraction and interpretation function and a multi-channel recording function for duplex speech, the multi-channel recording function for duplex speech having sufficient capacity simultaneously to record all duplex speech channels on the multi-channel monitored duplex through route.

There is further provided a method of recording duplex speech on a telecommunication network recording system comprising an activation means where said activation means requires only a single stage dialling or keying process, where either by:
(a) inserting an access code prior to a telephone number or
(b) utilising a network triggering mechanism for each incoming telephone call to each specified user
a duplex speech conversation is routed via a multi-channel monitor on a non-switched multi-channel monitored duplex through route and further routed via a multi-channel twin simplex interface which connects the multi-channel monitor to a multi-channel network recording system for duplex speech said multi-channel network recording system for duplex speech comprising a signalling extraction and interpretation function and a multi-channel recording function for duplex speech, the multi-channel recording function for duplex speech having sufficient capacity simultaneously to record all duplex speech channels on the multi-channel monitored duplex through route.

The present invention will now be described by way of example by reference to the accompanying drawings in which:
Figure 1 shows a diagrammatic representation of the network equipment for a Telephone Network Call Recording Service.
Figure 2 shows a diagrammatic representation of the UK Public Switched Telephony Network for an ordinary call.
Figure 3 shows a diagrammatic representation of the access code activation means used for the recording of duplex speech initiated by the calling user.
Figure 4 shows a diagrammatic representation of the combined access code activation means used for the recording of duplex speech initiated on behalf of a pre-registered called user.
Figure 5 shows a diagrammatic representation of the network triggering means used for the recording of duplex speech initiated by a call diversion on behalf of a pre-registered called user.
Figure 6 shows a diagrammatic representation of the activation of the Recording Retrieval Service Function.

An object of the present patent application is for the recording of the duplex speech of telephone conversations, by a Multi-Channel Network Recording System For Duplex Speech, where each calling user has specifically requested the recording to be made. A further object of the present patent application is for the recording of the duplex speech of telephone conversations, by a Multi-Channel Network Recording System For Duplex Speech, where each called user requires the recordings to be made. However the arrangement of a Multi-Channel Network Recording System For Duplex Speech, as described in Appendix A, is not directly suitable to achieve such objectives, because the predefined telephone numbers are not defined by the calling user, but by the network operator possibly under the direction of a national authority.

Patent No. GB 2 282 027 B, titled Telecommunication Switching, and herein described as Harmonic Switching, includes the following statement: When the harmonic subscriber dials a suitable break out code, the voiceband part of the call will be routed via the voiceband part of the harmonic Network.

The break out code is dialled before the normal dialled number, which relates to the called user. The term break out code, as used above, is now more commonly described in telecommunications as an access code. It is thus possible by using an access code, to ensure that a call is routed to the network to which the access code relates.

A network normally has a significant number of nodes and interconnections, but an access code could also be used to ensure that a call is routed via a specific transmission system or specific parallel transmission systems, provided the access code only relates to a specific transmission system or specific parallel transmission systems. In essence a very simple network may consist of just one logical connection. For the purposes of the present application such a small network will be described as a Multi-Channel Monitored Duplex Through Route.

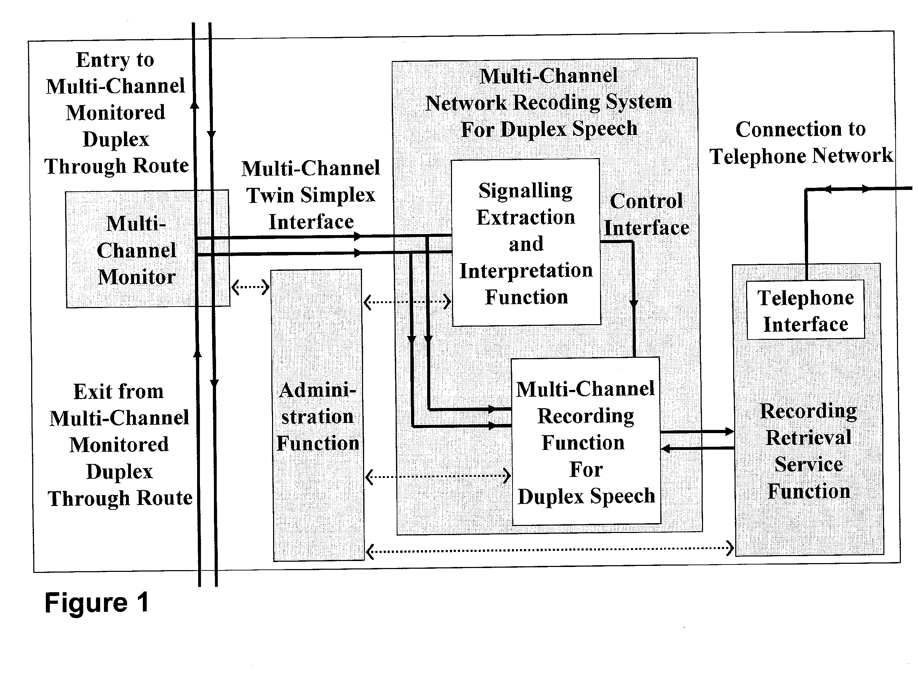

A characteristic of a Multi-Channel Monitored Duplex Through Route is that it is so simple that it cannot have any network level switching functionality. A Multi-Channel Monitored Duplex Through Route is shown as a duplex pair of lines in Figure 1. Consequently a Multi-Channel Monitored Duplex Through Route can also be accurately described as a Non-Switched Multi-Channel Monitored Duplex Through Route. Because a Multi-Channel Monitored Duplex Through Route has no network level switching functionality, it is possible to use a single-stage keying/dialling sequence to request the establishment of a connection from a calling party to a called party, which passes via a Multi-Channel Monitored Duplex Through Route, provided a specific access code is included at the start of the single-stage keying/dialling sequence.

If by using a specific access code in addition to a normal full-length telephone number, a call is routed via a Multi-Channel Monitored Duplex Through Route, then the calling user has by choice requested that the call is routed via a Multi-Channel Monitored Duplex Through Route. In this case, an icon, called "Record my call", could be implemented within a mobile handset, which dials 13579 and waits for the user to enter a national/local telephone number.

Some normal full length telephone numbers appear to consist of two parts, for example some free phone numbers begin 0800. Consequently an access code may be part of a called user telephone number. Consequently it is possible for a specific first part of a normal full-length telephone number, to cause a call to be routed via a Multi-Channel Monitored Duplex Through Route.

A Multi-Channel Monitored Duplex Through Route is shown in Figure 1 with the equipment that is attached to record the duplex speech channels.

A Multi-Channel Monitor enables equipment to be attached to the Multi-Channel Monitored Duplex Through Route by means of a Multi-Channel Twin Simplex Interface. The Multi-Channel Twin Simplex Interface is functionally a unidirectional interface, although this may not be the case at the physical level for some implementations. The Multi-Channel Twin Simplex Interface connects to a Signalling Extraction and Interpretation Function and a Multi-Channel Recording Function For Duplex Speech. The task of the Signalling Extraction and Interpretation Function is to determine when valid calls start and finish and to determine its calling line identity and its called line identity for each valid call. At the start of each valid call the Signalling Extraction and Interpretation Function informs the Multi-Channel Recording Function For Duplex Speech via the Control Interface that it should start recording the duplex speech path, that corresponds to the valid call, including the details relating to the calling line identity and its called line identity as well as the date, start time and duration.

The Multi-Channel Recording Function For Duplex Speech is also connected to a Recording Retrieval System Function so that the recorded information can be retrieved when required. The Recording Retrieval System Function is connected to a telephone network via an ordinary user interface so that requests for duplex speech retrieval can be received and the duplex speech replayed.

Any faults detected by the Signalling Extraction and Interpretation Function, or the Multi-Channel Recording Function For Duplex Speech, or the Recording Retrieval System Function should be reported to an Administration Function.

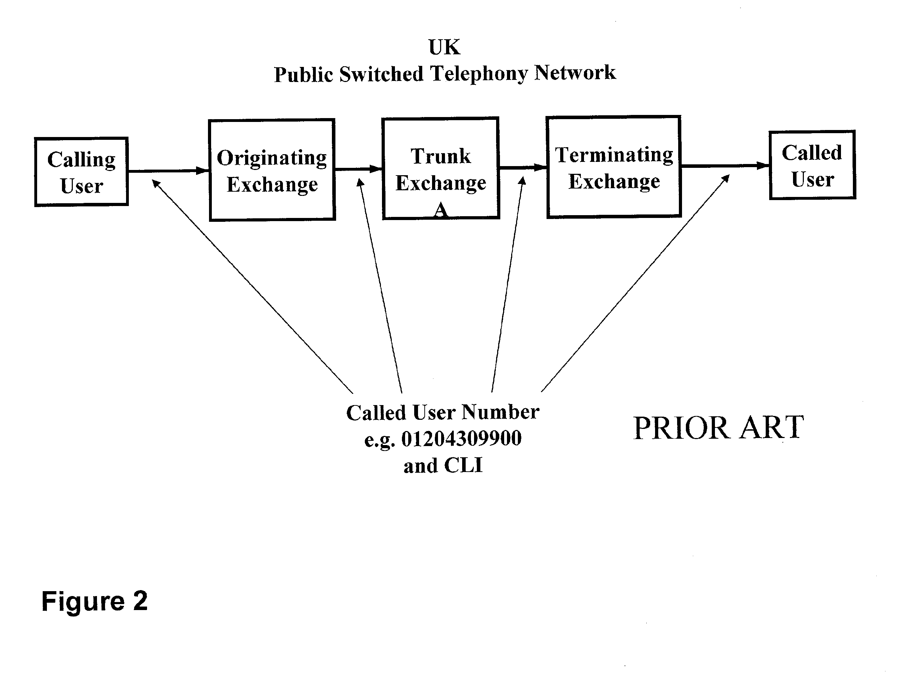

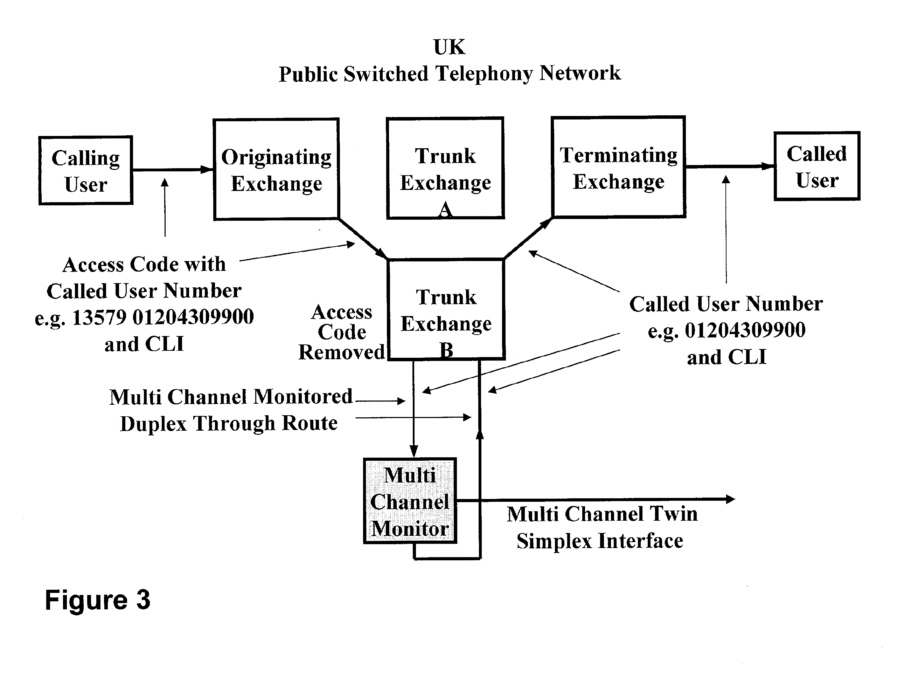

In order to aid the understanding of Figures 3, 4 and 5, Figure 2 is included as prior art to provide a diagrammatic representation of the UK Public Switched Telephony Network for an ordinary telephone call where the called user number as well as the calling line identity is carried across the network.

An arrangement herein called an access code activation means by which the duplex speech channel is routed via the Multi-Channel Monitored Duplex Through Route is shown in Figure 3.

A very useful feature of using an Access Code to route a call to a Multi-Channel Monitored Duplex Through Route is that once the access code has been used to route the call towards the entry of a desired network, or in this case the entry to a Multi-Channel Monitored Duplex Through Route, the access code is removed before the signalling arrives at the entry to the Multi-Channel Monitored Duplex Through Route. The telephone number of the called user is still carried by the signalling messages. Consequently the signalling relating to the duplex speech channels, on exiting the Multi-Channel Monitored Duplex Through Route, is already in just the form required to enable the call to be routed to the called user. Hence no changes to the signalling are required as the signalling passes along the Multi-Channel Monitored Duplex Through Route. As the telephone number of the calling subscriber, also known as the Calling Line Identity (CLI), is still contained in the signalling messages, then services such as the Call Return Service (1471 in the UK) and Caller Display Service should not be affected by being routed via a Multi-Channel Monitored Duplex Through Route.

If a Multi-Channel Network Recording System For Duplex Speech, similar to the example described in Appendix A, was instructed that the predefined telephone numbers would include all valid telephone numbers, then all the duplex speech circuits, on a Multi-Channel Monitored Duplex Through Route may be recorded. The only reason for not recording a duplex speech circuit would be when a valid telephone call was not in progress. In which case a recording of a duplex speech circuit would be made from the start of a call to the end of a call. The recording of facsimile or modem calls would not normally be undertaken unless a Multi-Channel Network Recording System For Duplex Speech is able accurately to record such traffic.

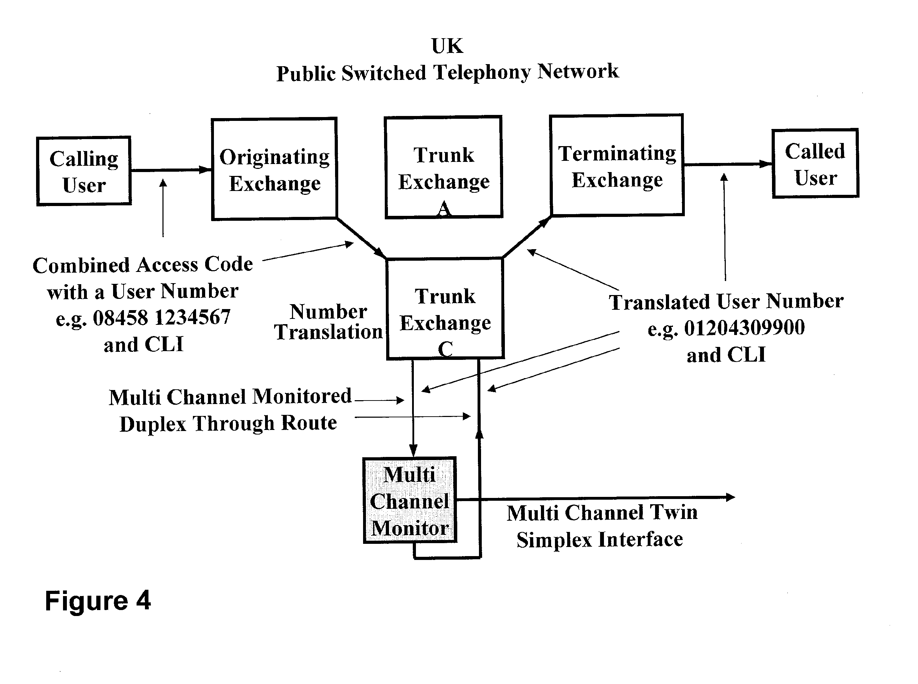

Figure 3 describes the arrangement where it is the calling user who wishes to have the call recorded and the calling user has to add an access code in front of a normal telephone number. A means whereby a called user can ensure that all incoming calls are recorded is for the called user to have a telephone number, which includes an access code. Figure 4 represents such an arrangement. This will require the called user to have registered for a Call Recording Service and to have been allocated a special telephone number, which has a combined access code and telephone number, before having any incoming calls recorded. For this arrangement to function Trunk Exchange C, in Figure 4, will have to perform a number translation so that the Multi Channel Monitored Duplex Through Route carries the ordinary telephone number. This is necessary for call establishment and to enable satisfactory recording retrieval. The access code of the combined access code and telephone number could make it apparent to a calling user that the call would be recorded for the called user and at the expense of the called user.

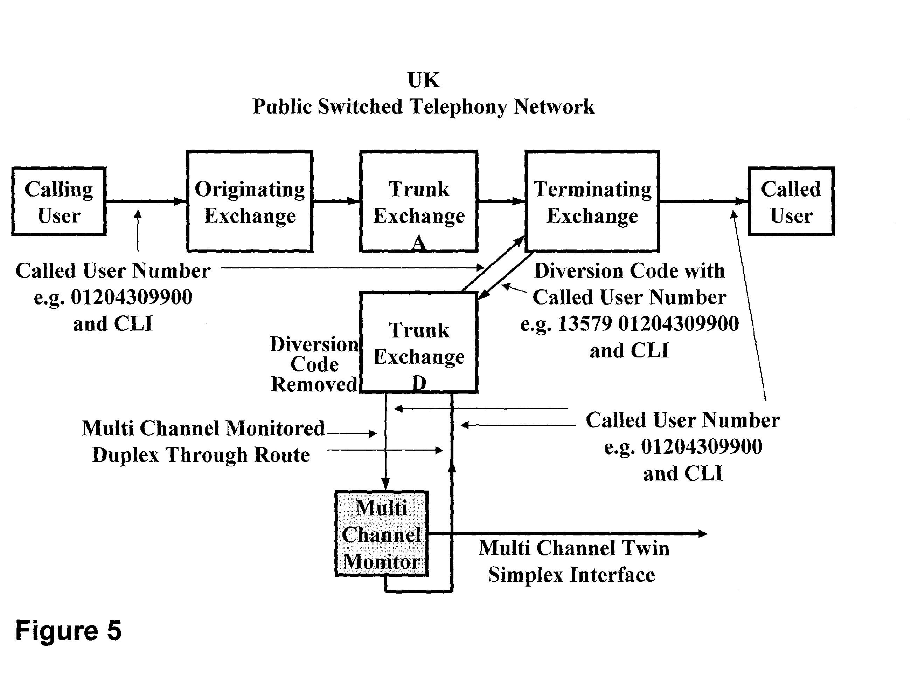

If a called user requires that all incoming calls are recorded, but that the normal telephone number should still be used, then this is possible provided the terminating exchange, as shown in Figure 5, activates a call diversion for each incoming call, by adding an access code to the required telephone number. This will result in the call being diverted to Trunk Exchange D, where the diversion access code is removed and the call can continue via the Multi Channel Monitored Duplex Through Route and the Multi Channel Monitor towards the called user. Again the called user must register for such a service. Instead of using call diversion it is possible to use an intelligent network triggering arrangement to cause the call to be routed via the Multi Channel Monitor, however it means that all calls entering the overall network must be checked to see if they should be redirected via a Multi Channel Monitor.

There is little point in recording the duplex speech of a telephone conversation on behalf of a user, unless it is possible to charge the user for so doing. Because an Access Code is used to route the calls to a Multi-Channel Monitored Duplex Through Route, then it is possible to impose a charge, on the user, for making a telephone call with a special Access Code. Services, which incur higher call charges and which are invoked by use of Access Codes, are often referred to as Premium Rate Services.

Pre-registered services for called users will incur charges probably based on usage as agreed as part of the service. For calling users who wish calls to be recorded the arrangements can be more straightforward.

A useful characteristic of the access code activation means is that a calling user, who requires the call to be recorded, does not have to undertake a special action prior to using the Call Recording Service. For example the user neither has to register with a Call Recording Service Provider, nor does the user have to provide any credit card details, before using the service for the first time. This is because payment is via the normal user billing means for using an Access Code. Consequently the billing for an access code is the same for all called destinations, in which case the service may not function for some, or all, high charge destinations, such as international destinations. This can be achieved by the application of simple call barring so that selected services cannot be accessed unless explicitly required by a telephone provider.

A further useful characteristic of the access code activation means is that the making of a call, which is to be recorded, will not involve the contacting of a Call Recording Service Provider and confirming the user's identity, before keying/dialling the number to which the call is to be made. This is termed a two-stage keying or dialling process. Two-stage keying or dialling is more complex to use and therefore may be considered as less user friendly. A disadvantage of two-stage keying/dialling is that the Calling Line Identity of the calling user will not be forwarded to the called user. The access code activation means is a single-stage keying/dialling process. The access code activation means does not involve the manual starting or stopping of any User Terminal Recording Device For Duplex Speech.

There is also little point in recording the duplex speech of a telephone conversation, unless certain details about the call are also recorded. Where possible the telephone number of the calling user and the telephone number of the user, who was called, are recorded, along with the date and starting time of the call. Either the date and finishing time or the duration of the call should also be recorded. The form of Multi-Channel Network Recording System For Duplex Speech, as described in Appendix A, is able to monitor the signalling associated with each monitored speech circuit to ascertain:
the telephone number of the calling user;
the telephone number being called;
the date and time the recording started;
the duration of the recording.

Within a modern digital telephony network, information relating to the telephone number of the calling user, as well as the telephone number of the user being called, is included within the signalling message which requests the establishment of a telephone call. This also applies for a request that includes an Access Code.

There is no issue when it is the calling user who has requested the recording of duplex speech to be made, but when the called user has requested all incoming calls to be recorded, it may be necessary to prevent the calling line identity of the calling user either from being recorded or from being given to the called user, when the calling user has requested the calling line identity to be withheld.

In addition to storing the recordings of duplex speech, a Multi-Channel Recording Function For Duplex Speech will also create and store a current Index of all the recordings of duplex speech it holds.

When it is calling users who have requested the recordings, the entries within a Calling Line Identity Index will be placed in numerical order so that all the references to recordings relating to each calling user terminal (calling line identity), will be held together. A copy of said Calling Line Identity Index for each Multi-Channel Recording Function For Duplex Speech will be available to the Recording Retrieval Service Function.

When it is called users who have requested the recordings, the entries within a Called User Identity Index will be placed in numerical order so that all the references to recordings relating to each called user terminal will be held together. A copy of said Called User Identity Index for each Multi-Channel Recording Function For Duplex Speech will be available to the Recording Retrieval Service Function.

It is possible that one call will be recorded twice, once for the calling user and once for the called user. It is intended that this will always result in the recordings being made by different instances of Multi-Channel Recording Function For Duplex Speech associated with different instances of Multi-Channel Monitor and Multi-Channel Monitored Duplex Through Route.

Of course there is little point in recording the duplex speech of a telephone conversation, unless there is a means for retrieving any recordings that have been made.

When it is a calling user who requests a recording of duplex speech to be made, the only user who would normally be able to access this recording is the user who was the calling user for this recording. To be more precise the calling user equates to a calling user terminal. This is because it is the calling user terminal identity (known as the calling line identity), which is the key piece of reference information, stored with this recording of duplex speech, by the Multi-Channel Network Recording System For Duplex Speech.

When it is a called user who requests a recording of duplex speech to be made, the only user who would normally be able to access said recording is the user who was the called user for said recording. To be more precise the called user equates to a called user terminal. This is because it is the called user terminal identity, (which also has its own calling line identity), which is the key piece of reference information, stored with said recording of duplex speech, by the Multi-Channel Network Recording System For Duplex Speech.

Hence for both of the above arrangements the Calling Line Identity of a user who requests a recording from a Recording Retrieval Service Function should match the key piece of stored reference information in either a Calling Line Identity Index or a Called User Identity Index.

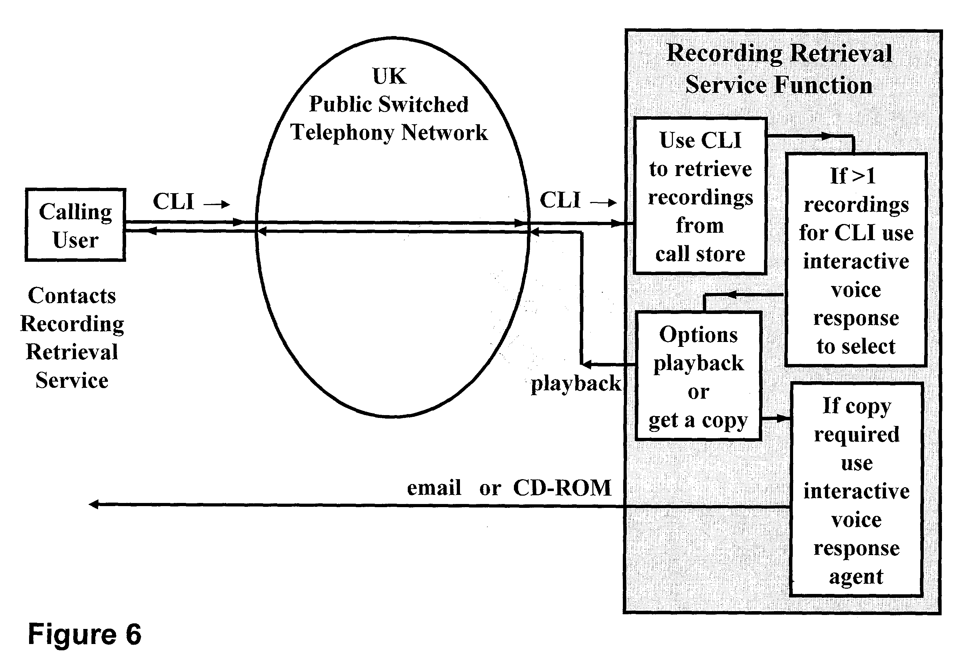

This arrangement for initiating a Recording Retrieval Service Function is shown in Figure 6.

Consequently by making a telephone call to a Recording Retrieval Service Function Telephone Line of a Telephone Network Call Recording Service, from the same user terminal, which was used for a recording; a requesting user can request details of stored recordings. The Recording Retrieval Service Function can access its index to determine how many, if any, recordings there are with the same Calling Line Identity as the requesting user. If one, or more than one, match is found then the calling user may be offered, by means of an Interactive Voice Response and Menu arrangement, a list of recordings, with date, time, duration and, where permitted, the telephone number of the other user. The requesting user is then asked to indicate, by keying, which, if any, of the recordings the requesting user wishes to listen to.

Provided a prearranged agreement has been satisfactorily established, whereby a first user of a Telephone Network Call Recording Service wishes to allow a second user with a different Calling Line Identity to be able to retrieve recordings of duplex speech relating to the first user then the Telephone Network Call Recording Service would permit requests from the second user for such recordings. This arrangement would for example enable a secretary to make notes of telephone conversations that had been held. Such requests could still be made using the Interactive Voice Response arrangement. Additional, more complex, options may be offered, which may require talking to a human operator, in order to arrange a more permanent form of recording being supplied to the first or second user, for example a CD-ROM sent by post. Where an index, of the recordings of duplex speech, is required this could be sent by means of an email.

The function of the Multi-Channel Monitor, as shown in Figure 1, is to allow the Multi-Channel Monitored Duplex Through Route to be monitored without it changing the contents of the duplex channels on the Multi-Channel Monitored Duplex Through Route in any unacceptable manner. There are several ways this can be achieved.

A high impedance monitor may be applied to the Multi-Channel Monitored Duplex Through Route, so that only a very small amount of energy is extracted from the Multi-Channel Monitored Duplex Through Route. In this case amplifiers will be required to return the extracted signal back to normal levels in order to drive the Multi-Channel Twin Simplex Interface.

Simple digital repeaters, or regenerators can be inserted into the Multi-Channel Monitored Duplex Through Route itself so that normal level signals can be extracted and supplied to the Multi-Channel Twin Simplex Interface.

The Multi-Channel Monitor could consist of a digital cross-connect, an example of which is an SDH (Synchronous Digital Hierarchy) cross-connect. A further example is an SDH Add and Drop Multiplexer. Both these examples of equipment can normally provide a suitable monitoring function of the multiple tributaries that they handle.

A particular advantage of using a digital cross-connect function as the Multi-Channel Monitor is that in the event of certain faults occurring in the Multi-Channel Network Recording System For Duplex Speech, then certain actions can be taken in order to prevent, the calling user starting, or continuing with a duplex speech call that should be being recorded, but because of a detected fault, that has been reported to an Administration Function, the recording is not taking place. As all calls passing through the Multi-Channel Monitored Duplex Through Route, are being charged to a user, it is desirable for the tributary, or tributaries, so affected to be removed from service, by the digital cross-connect under the direction of the Administration Function. The Administration Function may also help prevent faults in the Signalling Extraction and Interpretation Function and the Recording Retrieval Service Function from allowing calls, which are not being recorded satisfactorily, from continuing.

### Appendix A

A Non-Intrusive Monitoring System for Lawful Interception and other selective Recording Applications

### HINTON range: Telesoft Technologies, Blandford, Dorset, UK

The HINTON range monitors both signalling and bearer channels, switching voice to a recording device based on a user-configurable dynamic target database.

The HINTON is ideally suited to Lawful Interception and CALEA type applications requiring real-time monitoring and recording to assist in the fight against crime and terrorism, but equally applicable in quality of service monitoring environments,

Non-Intrusive monitoring is the ability to passively monitor live traffic links, (via 'T' connections to the signalling path), without introducing a load or affecting the live links.

The HINTON is a system that offers the ability to selectively monitor and record individual voice channels.

The HINTON monitors all calls by analysing the signalling channels carrying the call control protocol. For every call set-up, an on-board of target information is queried to determine if a call matches pre-configured target criteria.

If a match is found, then the third party voice recording equipment is immediately triggered via a bi-directional alarm message, indicating both 64kbit/s circuits *(comprising the duplex voice path),* these circuits are switched to the next available channels on the Voice Recorder. In addition the HINTON informs the Voice Recorder of the timeslots selection and all call events,

### Appendix A (continued)

allowing the Voice Recorder to determine when to start and stop a recording session

## Claims

1. A telecommunication network comprising means connecting a duplex speech conversation to a recording system for duplex speech, comprising an activation means **characterised in that** said activation means requires only a single stage dialling or keying process, where either by:
(a) inserting an access code prior to a telephone number or
(b) utilising a network triggering mechanism for each incoming telephone call to each specified user
a duplex speech conversation being carried by the telecommunication network is routed via a multi-channel monitor on a non-switched multi-channel through route and further comprising a multi-channel twin simplex interface which connects the multi-channel monitor to a multi-channel network recording system for duplex speech said multi-channel network recording system for duplex speech comprising a signalling extraction and interpretation function and a multi-channel recording function for duplex speech, the multi-channel recording function for duplex speech having sufficient capacity simultaneously to record all duplex speech channels on the multi-channel monitored duplex through route.

2. A telecommunication network recording system for duplex speech as claimed in claim 1, further including means to include with each recording of duplex speech all or some of the following:
(i) a calling line identity of a calling user for each recording
(ii) a called user identity of a called user for each recording
(iii) a date and start time of each recording
(iv) a duration of each recording

3. A telecommunication network recording system for duplex speech as claimed in claim 2, which telephone network call recording system for calling users requires no pre-registration of a calling user prior to using said service and where recording of duplex speech is initiated by dialling or keying an access code prior to a telephone number.

4. A telecommunication network recording system for duplex speech as claimed in claim 2, which telephone network call recording service for called users requires pre-registration of a called user prior to using said service and where recording of duplex speech is initiated by dialling or keying an access code prior to a telephone number of a pre-registered called user.

5. A telecommunication network recording system for duplex speech as claimed in claim 2, which telephone network call recording service for called users requires pre-registration of a called user prior to using said service and comprising means whereby recording of duplex speech is initiated utilising a network triggering mechanism for each incoming telephone call to each pre-registered called user.

6. A telecommunication network recording system for duplex speech as claimed in claim 5, where the network triggering mechanism comprises an intelligent network arrangement.

7. A telecommunication network recording system for duplex speech as claimed in claim 5, where the network triggering mechanism comprises a call diversion arrangement at a terminating exchange.

8. A telecommunication network recording system for duplex speech as claimed in claim 3, comprising an index where entries within a calling line identity index of recordings of duplex speech are placed in a numerical order where said numerical order corresponds to the calling line identities of calling users.

9. A telecommunication network recording system for duplex speech as claimed in any one of claims 4, 5, 6, or 7, comprising a called user identity index of recordings of duplex speech wherein the index is in a numerical order where said numerical order corresponds to the called user identities of pre-registered called users.

10. A telecommunication network recording system for duplex speech as claimed in claim 8, where the created calling line identity index of recording of duplex speech provides means to simplify a process of determining which recordings relate to which calling user.

11. A telecommunication network recording system for duplex speech as claimed in claim 9, where the created called user identity index of recordings of duplex speech provides means to simplify a process of determining which recordings relate to which pre-registered called user.

12. A telecommunication network recording system for duplex speech as claimed in claim 10 or 11, where the created index may also include all or some of the following:
(i) a calling line identity of a calling user for each recording
(ii) a called user identity of a called user for each recording
(iii) a date and start time of each recording
(iv) a duration of each recording

13. A telecommunication network recording system for duplex speech as claimed in any one of claims 3, 8, 10 or 12, where the recording retrieval service function will only normally permit the retrieval of recordings of duplex speech with a stored calling line identity from a user with the same calling line identity.

14. A telecommunication network recording system for duplex speech as claimed in any one of claims 4, 5, 6, 7, 9, 11 or 12, where the recording retrieval service function comprises means which will normally only permit the retrieval of recordings of duplex speech with a stored called user identity from a pre-registered user with a corresponding calling line identity.

15. A telecommunication network recording system for duplex speech as claimed in claim 13, comprising means whereby a registered arrangement may be established between a telephone network call recording service and a first calling user whereby a first calling user permits a second calling line identity to be able to retrieve recordings of duplex speech relating to the first calling user.

16. A telecommunication network recording system for duplex speech as claimed in claim 14, comprising means where a registered arrangement may be established between a telephone network call recording service and a first called user whereby a first pre-registered called user permits a second calling line identity to be able to retrieve recordings of duplex speech relating to the first pre-registered called user.

17. A telecommunication network recording system for duplex speech as claimed in any one of claims 13, 14, 15 or 16, comprising means whereby permitted users are assisted by means of interactive voice responses and/or menus in retrieving entries to an index and/or audio recordings of duplex speech via a telephone network.

18. A telecommunication network recording system for duplex speech as claimed in any one of claims 13, 14, 15, 16 or 17, comprising means providing permitted users to receive a CD-ROM containing entries to an index and/or recordings of duplex speech.

19. A telecommunication network recording system for duplex speech as claimed in any one of claims 13, 14, 15, 16, 17 or 18, comprising means whereby only a created index is made available to permitted users.

20. A telecommunication network recording system for duplex speech as claimed in any one of claims 1 to 19, where the multi-channel monitor comprises a digital cross-connect function.

21. A telecommunication network recording system for duplex speech as claimed in any one of claims 1 to 20, comprising an administration function whereby certain faults reported thereto result in the multi-channel monitor being instructed to interrupt the transmission of a duplex speech channel or duplex speech channels and a duplex signalling channel or duplex signalling channels on the multi-channel monitored duplex through route.

22. A telecommunication network recording system for duplex speech as claimed in any one of claims 1 to 19, the multi-channel monitor comprising a non-intrusive high impedance monitor.

23. A telecommunication network recording system for duplex speech as claimed in claim 3, where a user telephone handset has a call recording service icon implemented within said handset which provides the call recording service access code to be attached as a prefix to a national/local telephone number.

24. A telecommunication network recording system for duplex speech as claimed in claim 23, where the telephone handset is a mobile telephone handset.

25. A telecommunication network recording system for duplex speech as claimed in any preceding claim, which records only those channels which are deemed to be carrying duplex speech by the signalling extraction and interpretation function.

26. A method of recording duplex speech on a telecommunication network recording system, comprising an activation means **characterised in that** said activation means requires only a single stage dialling or keying process, where either by:
(a) inserting an access code prior to a telephone number or
(b) utilising a network triggering mechanism for each incoming telephone call to each specified user
a duplex speech conversation is routed via a multi-channel monitor on a non-switched multi-channel monitored duplex through route and further routed via a multi-channel twin simplex interface which connects the multi-channel monitor to a multi-channel network recording system for duplex speech, said multi-channel network recording system for duplex speech comprising a signalling extraction and interpretation function and a multi-channel recording function for duplex speech the multi-channel recording function for duplex speech having sufficient capacity simultaneously to record all duplex speech channels on the multi-channel monitored duplex through route.

27. A method of recording duplex speech on a telecommunication network as claimed in claim 26, where included with each recording of duplex speech are all or some of the following:
(i) a calling line identity of a calling user for each recording
(ii) a called user identity of a called user for each recording
(iii) a date and start time of each recording
(iv) a duration of each recording

28. A method of recording duplex speech on a telecommunication network as claimed in claim 27, which provides a telephone network call recording service for calling users where no pre-registration of a calling user is required prior to using said service and where recording of duplex speech is initiated by dialling or keying an access code prior to a telephone number.

29. A method of recording duplex speech on a telecommunication network as claimed in claim 27, which provides a telephone network call recording service for called users where pre-registration of a called user is required prior to using said service and where recording of duplex speech is initiated by dialling or keying an access code prior to a telephone number of a pre-registered called user.

30. A method of recording duplex speech on a telecommunication network as claimed in claim 27, which provides a telephone network call recording service for called users where pre-registration of a called user is required prior to using said service and where recording of duplex speech is initiated utilising a network triggering mechanism for each incoming telephone call to each pre-registered called user.

31. A method of recording duplex speech on a telecommunication network as claimed in claim 30, where the network triggering mechanism is achieved by an intelligent network arrangement.

32. A method of recording duplex speech on a telecommunication network as claimed in claim 30, where the network triggering mechanism is achieved by a call diversion arrangement at the terminating exchange.

33. A method of recording duplex speech on a telecommunication network as claimed in claim 28, where entries within a calling line identity index of recordings of duplex speech are placed in a numerical order where said numerical order corresponds to the calling line identities of calling users.

34. A method of recording duplex speech on a telecommunication network as claimed in any one of claims 29, 30, 31, or 32, where entries within a called user identity index of recordings of duplex speech are placed in a numerical order where said numerical order corresponds to the called user identities of pre-registered called users.

35. A method of recording duplex speech on a telecommunication network as claimed in claim 33, where a created calling line identity index of recording of duplex speech is employed to simplify a process of determining which recordings relate to which calling user.

36. A method of recording duplex speech on a telecommunication network as claimed in claim 34, where the created called user identity index of recordings of duplex speech is employed to simplify a process of determining which recordings relate to which pre-registered called user.

37. A method of recording duplex speech on a telecommunication network as claimed in claim 35 or 36, where the created index may also include all or some of the following:
(i) a calling line identity of a calling user for each recording
(ii) a called user identity of a called user for each recording
(iii) a date and start time of each recording
(iv) a duration of each recording

38. A method of recording duplex speech on a telecommunication network as claimed in any one of claims 28, 33, 35 or 37, where the recording retrieval service function only normally permits the retrieval of recordings of duplex speech with a stored calling line identity from a user with the same calling line identity.

39. A method of recording duplex speech on a telecommunication network as claimed in any one of claims 29, 30, 31, 32, 34, 36, or 37, where the recording retrieval service function only normally permits the retrieval of recordings of duplex speech with a stored called user identity from a pre-registered user with a corresponding calling line identity.

40. A method of recording duplex speech on a telecommunication network as claimed in claim 38, where a registered arrangement has been established between a telephone network call recording service and a first calling user whereby a first calling user permits a second calling line identity to be able to retrieve recordings of duplex speech relating to the first calling user.

41. A method of recording duplex speech on a telecommunication network as claimed in claim 39, where a registered arrangement has been established between a telephone network call recording service and a first called user whereby a first pre-registered called user permits a second calling line identity to be able to retrieve recordings of duplex speech relating to the first pre-registered called user.

42. A method of recording duplex speech on a telecommunication network as claimed in any one of claims 38, 39, 40 or 41, where permitted users are assisted by means of interactive voice responses and/or menus in retrieving entries to an index and/or audio recordings of duplex speech via a telephone network.

43. A method of recording duplex speech on a telecommunication network as claimed in any one of claims 38, 39, 40, 41 or 42, where permitted users may receive a CD-ROM containing entries to an index and/or recordings of duplex speech.

44. A method of recording duplex speech on a telecommunication network as claimed in any one of claims 38, 39, 40, 41, 42 or 43, where only a created index is made available to permitted users.

45. A method of recording duplex speech on a telecommunication network as claimed in any one of claims 26 to 44, where the multi-channel monitor contains a digital cross-connect function.

46. A method of recording duplex speech on a telecommunication network as claimed in any one of claims 26 to 45, where certain faults reported to the administration function result in the multi-channel monitor being instructed to interrupt the transmission of a duplex speech channel or duplex speech channels and a duplex signalling channel or duplex signalling channels on the multi-channel monitored duplex through route.

47. A method of recording duplex speech on a telecommunication network as claimed in any of claims 26 to 44, where the multi-channel monitor is a non-intrusive high impedance monitor.

48. A method of recording duplex speech on a telecommunication network as claimed in claim 28, where a user telephone handset has a call recording service icon implemented within said handset which provides the call recording service access code to be attached as a prefix to a national/local telephone number.

49. A method of recording duplex speech on a telecommunication network as claimed in claim 48, where the telephone handset is a mobile telephone handset.

50. A method of recording duplex speech on a telecommunication network as claimed in any one of claims 26 to 49, which records only those channels which are deemed to be carrying duplex speech by a signalling extraction and interpretation function.
